# EUROPEAN PATENT APPLICATION

(11) **EP 4 144 989 A1**
(43) Date of publication of application: **08.03.2023**
(21) Application number: 22194134.7
(22) Date of filing: 06.09.2022
(51) Int. Cl.: F04B 15/00, F04B 15/04, F04B 39/00, F04B 39/02, F04B 39/04, F04B 53/14

(54) **AN IMPROVED RECIPROCATING COMPRESSOR**

(30) Priority: 06.09.2021 GB 202112627
(71) Applicant: Gardner Denver Ltd., West Yorkshire BD5 7HW (GB)
(72) Inventor: Brown, Richard, Houghton le Spring, DH5 8JE (GB)
(74) Representative: Murgitroyd & Company

(57) **Abstract**

A reciprocating compressor is provided. The compressor comprises a crankcase (2) containing a crankshaft (4), and a cylinder (20) having at least one intake valve (24) for receiving a process gas and at least one exhaust valve (26) for removing the process gas. A distance piece (18) has a single chamber and is located between the crankcase (2) and the cylinder (20). A reciprocating piston head (22) is located in the cylinder (20) and attached to a distal end of a piston rod (16), where the piston rod extends through the distance piece (18) into the crankcase (2). The crankcase (2) comprises a crosshead housing (12) located between the distance piece (18) and the crankshaft (4), the crosshead housing containing a crosshead member (14) connecting a proximal end of the piston rod (16) to a small end of a first connecting rod (6), where a big end (8) of the first connecting rod is connected to the crankshaft (4). The compressor further comprises a first fluid seal (28) surrounding the piston rod (16) at a junction between the crosshead housing (12) and the distance piece (18), and a second fluid seal (30) surrounding the piston rod at a junction between the distance piece and the cylinder (20). The crankcase (2) defines a sealed chamber and includes a control gas inlet valve (11) connectable to control gas supply (9) so as to selectively fill the sealed chamber with a control gas.

## Description

### Field of the Invention

The present invention relates to the field of reciprocating compressors. More specifically, the present invention provides an improved reciprocating compressor which is particularly, although not exclusively, suited for use with flammable, hazardous or toxic gases.

### Background of the Invention

Distance pieces are employed in reciprocating compressors in order to isolate a compressor cylinder from the crankcase. Different types of distance piece are employed depending upon the application of the compressor.

Short, single compartment distance pieces are used mainly for lubricated service where some oil carryover is acceptable with the compressed gas. Part of the piston rod alternately enters the crankcase at the crosshead housing (where the piston rod and connecting rod meet) and the pressure packing of the cylinder. The oil carryover usually occurs at the wiper packing located between the crankcase and a proximal end of the distance piece, and/or at the pressure packing located between a distal end of the distance piece and the cylinder.

Longer, single compartment distance pieces are used in non-lubricating or lubricating service applications where oil carryover into the gas is to be avoided. No part of the piston rod may enter both the crosshead housing and the pressure packing of the cylinder. The piston rod in this application is usually fitted with a disc known as an oil slinger, which deflects oil on the rod away from the wiper packing and pressure packing seals.

Compressors handling flammable, hazardous or toxic gases currently employ a long, dual compartment distance piece, which may double the length of the distance piece compared to those single compartment arrangements described above. As well as the wiper packing and pressure packing seals at the respective crankcase and cylinder ends of the distance piece this distance piece also includes an intermediate partition packing seal located at the partition between the two compartments. In this arrangement, no part of the piston rod can enter the wiper packing, intermediate partition packing or pressure packing. The partition packing is provided in a segmental arrangement, and that segmental arrangement may be lubricated in certain applications. As the compressor is handling flammable, hazardous or toxic gases, buffer gas injection is provided so as to prevent the gases passing into the crankcase and potentially leaking to atmosphere. There may be two oil slingers employed on the piston rod, one for each compartment of the distance piece.

Whilst dual compartment distance pieces may prevent oil carryover and escape of harmful gases they mean that the overall length of the assembly can become undesirably large. This in turn means that the compressor itself is unduly wide, and increases the size of the foundation onto which the compressor is to be placed on site. Furthermore, longer distance pieces need longer piston rods, and so can require that the piston rod diameters are increased in order to prevent deformation of the longer piston rods. This can increase both the cost and weight of the compressor. Larger diameter piston rods can also reduce the flow rate of their respective cylinders as they take up space where process gas would otherwise be.

It is an aim of the present invention to obviate or mitigate one or more of these disadvantages in compressors handling harmful gases which are flammable, hazardous and/or toxic.

### Summary of the Invention

According to a first aspect of the present invention there is provided a reciprocating compressor comprising:
a crankcase containing a crankshaft;
a cylinder having at least one intake valve for receiving a process gas and at least one exhaust valve for removing the process gas;
a distance piece having a single chamber and being located between the crankcase and the cylinder;
a reciprocating piston head located in the cylinder and attached to a distal end of a piston rod, the piston rod extending through the distance piece into the crankcase;
wherein the crankcase comprises a crosshead housing located between the distance piece and the crankshaft, the crosshead housing containing a crosshead member connecting a proximal end of the piston rod to a small end of a first connecting rod, where a big end of the first connecting rod is connected to the crankshaft;
the compressor further comprising a first fluid seal surrounding the piston rod at a junction between the crosshead housing and the distance piece, and a second fluid seal surrounding the piston rod at a junction between the distance piece and the cylinder; and
wherein the crankcase defines a sealed chamber and includes a control gas inlet valve connectable to control gas supply so as to selectively fill the sealed chamber with a control gas.

The compressor may further comprise a detachable control gas supply canister fluidly connectable to the control gas inlet valve for supply of a control gas into the sealed chamber. The control gas supply canister may contain a control gas selected from the group comprising nitrogen and hydrogen. The control gas may be held within the crankcase at a crankcase pressure of up to 150 mbar(g).

The compressor may further comprise an oil slinger disc mounted on a portion of the piston rod located within the distance piece.

The compressor may further comprise a motor and a belt drive connecting the motor to the crankshaft.

The compressor may further comprise:
a motor housing attached to the crankcase; and
a motor housed within the motor housing and having a direct drive connection to the crankshaft; and
wherein the motor housing and crankcase define the sealed chamber.

According to a second aspect of the invention there is provided a method of compressing a process gas, the method comprising:
providing a reciprocating compressor in accordance with the first aspect;
connecting the crankshaft to a motor;
connecting the cylinder intake valve to a supply of the process gas;
connecting the control gas inlet valve to a supply of control gas;
filling the sealed chamber with the control gas; and
starting the motor so as to draw the process gas into and out of the cylinder.

The control gas may be selected from the group comprising nitrogen and hydrogen. The control gas may be held within the crankcase at a crankcase pressure of up to 150 mbar(g).

The control gas may be contained within a detachable supply canister connectable to the control gas inlet valve.

### Brief Description of the Drawings

Preferred embodiments of the present invention will now be described, by way of example only, with reference to the following drawings:
Figure 1 is a cross sectional view of a belt-driven reciprocating compressor; and
Figure 2 is a cross sectional view of a direct drive reciprocating compressor.

### Detailed Description of the Drawings

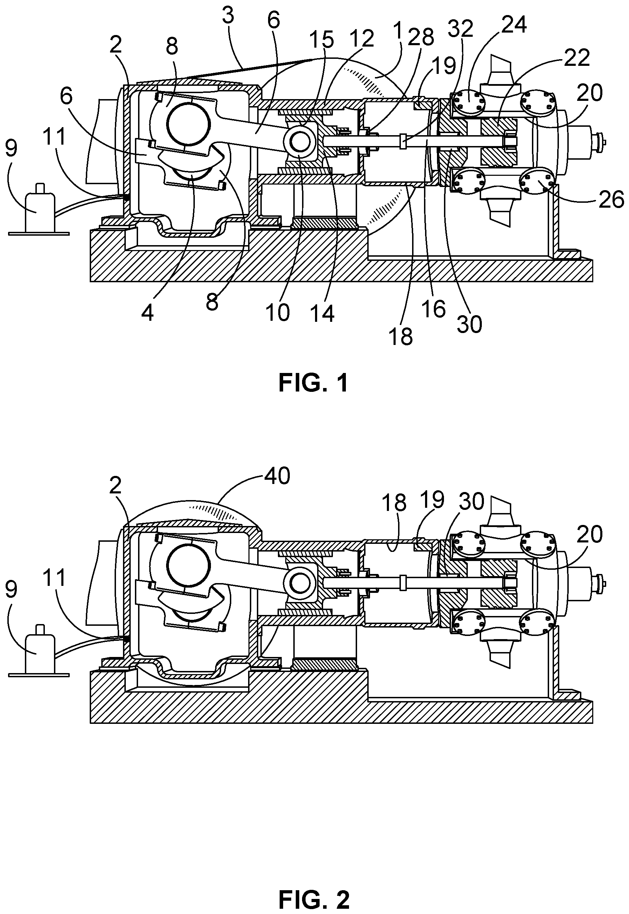

Figure 1 shows a cross section view of a two cylinder reciprocating compressor for compressing a process gas, preferably a gas which is flammable, hazardous or toxic. For illustrative purposes only one cylinder is shown in detail in Figure 1, but it should be understood that the other cylinder is configured in the same manner as that described below.

The compressor comprises a crankcase 2 housing a crankshaft 4, which is connected to the big ends 8 of a pair of connecting rods 6. In this first embodiment a driven pulley (not shown) is attached to an end of the crankshaft 4 with a drive belt 3 connecting the driven pulley to a drive pulley (not shown) of an external motor 1. The crankcase 2 includes an control gas inlet valve 11 which is set to maintain a particular control gas pressure within the crankcase, as the crankcase pressure drops gradually over time due to escape of gas from the crankcase into the distance piece. The control gas inlet valve may be connected to a supply of control gas. Preferably, the compressor further comprises a detachable control gas canister 9 which connects to the inlet valve 11 and supplies control gas thereto. The feed pressure of the gas canister 9 may be greater than the desired crankcase pressure, with the inlet valve 11 controlling the difference between the two.

The crankcase may include a plurality of crosshead housings, which are typically horizontally opposed or else arranged in a "W", "V" or "L" formation. The preferred embodiment of crankcase 2 illustrated here includes a pair of crosshead housings 12, which are horizontally opposed and form a sealed volume with the main crankcase. Each crosshead housing 12 houses a crosshead 14 which slides within crosshead guides 15 and connects a small end 10 of a respective connecting rod 6 to a proximal end of a piston rod 16. The piston rod 16 extends outwardly through a short, single compartment distance piece 18 to a cylinder 20. A distal end of the piston rod 16 connects to a piston head 22 within the cylinder 20, with each cylinder 20 having at least one intake valve 24 and at least one exhaust valve 26 controlling ingress and egress of a process gas.

A wiper packing 28 is located on the piston rod 16 at the join between the crosshead housing 12 and the distance piece 18, and provides a fluid seal to keep the control gas and oil in the crankcase 2. A pressure packing fluid seal 30 is located on the piston rod 16 at the join between the distance piece and the cylinder 20. The piston rod 16 also has an oil slinger disc 32 mounted on the rod within the distance piece compartment. The distance piece 18 includes a vent valve 19, which can be selectively actuated in order to vent any gas which slips past the pressure packing 30 from the cylinder 20 into the distance piece 18.

An alternative embodiment which uses a direct drive motor is illustrated in Figure 2. Unless otherwise stated the components described above in relation to the first embodiment are shared with this alternative embodiment and therefore will not be described again here. The shared components have however been labelled in Figure 2 using the same reference numbers as in Figure 1.

The key difference between the two embodiments is that in the alternative embodiment of Figure 2 the crankshaft is directly driven from a motor rather than being belt driven. The motor is contained within a motor housing 40 which is attached to the crankcase 2 such that the two crankcase and motor housing form a single, sealed volume. The motor is preferably water cooled.

### Industrial Applicability

The manner in which the compressors shown in Figures 1 and 2 operate will now be described.

In respect of the first embodiment shown in Figure 1, the crankcase 2 is sealed and is then purged by connecting the control gas inlet valve 11 to a supply of control gas. A low pressure control gas is used in the purging. The control gas is preferably nitrogen, and is it is preferably supplied at a pressure of around 100 mbar(g). The positive pressure created in the crankcase ensures that even if any of the process gas slips past the pressure packing 30 it will not be able to enter the crankcase 2. Any such gas entering the distance piece 18 can be safely vented via vent valve 19. That gas may be fed directly back into the cylinders if desired.

In respect of the alternative embodiment shown in Figure 2, the crankcase 2 is similarly sealed and then purged via the control gas inlet valve 11. In this embodiment the motor housing 40 and crankcase 2 form a single internal environment into which a low pressure control gas can be introduced. The control gas is preferably hydrogen or nitrogen, and it is preferably held within the crankcase 2 at a relatively small positive pressure of, for example, around 100 mbar(g). As with the first embodiment, the positive pressure created in the crankcase 2 and motor housing 40 ensures that even if any of the process gas being processed in the cylinders 20 slips past the pressure packing 30 it will not be able to enter the crankcase 2. Any such gas entering the distance piece 18 can be safely vented via vent valve 19. That gas may be fed directly back into the cylinders if desired.

By sealing the crankcase (and motor housing, if present) the present invention provides a safe crankcase where no harmful gases are able to enter that space should they slip from the cylinder into the distance piece. It also ensures that only a single, short distance piece without additional packing is needed for safe operation, thus reducing the size and cost of reciprocating compressors which are to process harmful gases. A relatively short distance piece also avoids the need to use reinforced or larger pistons rods. This also reduces, or minimises, the size of the foundation onto which the compressor is to be mounted, making further savings.

The low pressure control gas only needs to be replenished once a certain degree of leakage of the gas has occurred. Thus, the control gas can be supplied and topped up in relatively small quantities from canisters or the like connected to the crankcase inlet valve, avoiding the need for a separate control gas (e.g. nitrogen) generation system. Similarly, there is no need to purge the distance piece, as any gas slip from the cylinders can be safely vented from the distance piece. These features again reduce the operational costs associated with the compressor.

Utilising hydrogen as the purge gas in the crankshaft and motor housing of the alternative embodiment improves the efficiency of both the motor and compressor due to the reduced windage in the crankcase. It also reduces the cooling requirements for the motor. The present invention thus provides near-zero loss, oil-free compression of hydrogen.

By using a low pressure, elevated inlet the compressor of the present invention can be formed using existing castings. It can also be integrated with other third party componentry in a simple manner.

Although illustrated in two cylinder form, the compressor of the present invention may be a single cylinder compressor. It may equally have more than two cylinders. The components between the crankcase and each cylinder are the same whatever the configuration of cylinders.

Each cylinder may have any number of intake valves and exhaust valves instead of having one of each.

Whilst the control gas is preferably supplied via a detachable canister, the control gas supply may alternatively come from a permanent control gas generator which is connectable to the control gas inlet valve.

Other modifications and improvements may be incorporated without departing from the scope of the present invention.

## Claims

1. A reciprocating compressor comprising:
a crankcase containing a crankshaft;
a cylinder having at least one intake valve for receiving a process gas and at least one exhaust valve for removing the process gas;
a distance piece having a single chamber and being located between the crankcase and the cylinder;
a reciprocating piston head located in the cylinder and attached to a distal end of a piston rod, the piston rod extending through the distance piece into the crankcase;
wherein the crankcase comprises a crosshead housing located between the distance piece and the crankshaft, the crosshead housing containing a crosshead member connecting a proximal end of the piston rod to a small end of a first connecting rod, where a big end of the first connecting rod is connected to the crankshaft;
the compressor further comprising a first fluid seal surrounding the piston rod at a junction between the crosshead housing and the distance piece, and a second fluid seal surrounding the piston rod at a junction between the distance piece and the cylinder; and
wherein the crankcase defines a sealed chamber and includes a control gas inlet valve connectable to control gas supply so as to selectively fill the sealed chamber with a control gas.

2. The compressor of claim 1, further comprising a detachable control gas supply canister fluidly connectable to the control gas inlet valve for supply of a control gas into the sealed chamber.

3. The compressor of claim 2, wherein the control gas supply canister contains a control gas selected from the group comprising nitrogen and hydrogen.

4. The compressor of claim 2 or claim 3, wherein the control gas is held within the crankcase at a crankcase pressure of up to 150 mbar(g).

5. The compressor of any preceding claim, further comprising an oil slinger disc mounted on a portion of the piston rod located within the distance piece.

6. The compressor of any preceding claim, further comprising a motor and a belt drive connecting the motor to the crankshaft.

7. The compressor of any of claims 1 to 5, further comprising:
a motor housing attached to the crankcase; and
a motor housed within the motor housing and having a direct drive connection to the crankshaft; and
wherein the motor housing and crankcase define the sealed chamber.

8. A method of compressing a process gas, the method comprising:
providing a reciprocating compressor in accordance with claim 1;
connecting the crankshaft to a motor;
connecting the cylinder intake valve to a supply of the process gas;
connecting the control gas inlet valve to a supply of control gas;
filling the sealed chamber with the control gas; and
starting the motor so as to draw the process gas into and out of the cylinder.

9. The method of claim 8, wherein the control gas is selected from the group comprising nitrogen and hydrogen.

10. The method of claim 8 or claim 9 wherein the control gas is held within the crankcase at a crankcase pressure of up to 150 mbar(g).

11. The method of any of claims 8 to 10 wherein the control gas is contained within a detachable supply canister connectable to the control gas inlet valve.
